# FASCICULE DE BREVET EUROPEEN

(11) **EP 0 425 347 B1**
(45) Date de publication et mention de la délivrance du brevet: **22.03.1995**
(21) Numéro de dépôt: 90402930.3
(22) Date de dépôt: 18.10.1990
(51) Int. Cl.: G06F 17/60, H04H 9/00, G06F 17/30

(54) **Dispositif portable électronique pour fidéliser un public à un média ou similaire**
Tragbares elektronisches Gerät um die Öffentlichkeit an Medien oder ähnliches zu binden
Portable electronic device for making a public loyal to a media or similar

(30) Priorité: 24.10.1989 FR 8913910
(43) Date de publication de la demande: 02.05.1991
(73) Titulaire: ADVENTURE, F-92130 Issy-les-Moulineaux (FR)
(72) Inventeur: Audebert, Yves, F-78290 Croissy-sur-Marne (FR); Delahaye, Achille, F-94430 Chennevieres-sur-Marne (FR)
(74) Mandataire: Colas, Jean-Pierre

(56) Documents cités:
- EP-A- 0 144 085
- EP-A- 0 263 635
- EP-A- 0 308 224
- EP-A- 0 338 936
- WO-A-86/03310

## Description

L'invention concerne un dispositif portable électronique permettant la mise en oeuvre d'opérations essentiellement destinées à fidéliser une clientèle ou un public à un media, un service, un produit ou autre.

Les opérations commerciales ou similaires visant à fidéliser une clientèle ou un public par attribution d'un gain (lot en nature ou en espèces, réduction de prix sur un produit ou un service, etc...) en récompense de sa fidélité sont extrêmement répandues. Ces opérations peuvent revêtir des formes les plus diverses et leurs modalités sont généralement spécifiques à chaque opération. Elles sont de ce fait coûteuses, limitées dans le temps, relativement impropres à un montage impliquant plusieurs partenaires et leur impact ne peut pas toujours être mesuré finement.

Le problème de la fidélisation d'un public est particulièrement crucial dans le domaine de la presse, de la radio, de la télévision et autres medias dont une bonne partie des ressources provient de la publicité, du parrainage ou similaire.

L'invention vise à fournir un dispositif portable électronique qui offre de nouvelles possibilités pour la mise en oeuvre d'opérations de fidélisation de clientèle ou de public impliquant l'exploitation par la clientèle ou le public d'informations renouvelables qui sont mises à sa disposition sur des supports d'informations (presse, radio, télévision, affichages divers, etc...) adéquats.

A cet effet, l'invention a pour objet un dispositif selon la revendication 1.

De préférence, ladite information déchiffrée comprend une donnée de datation et lesdits moyens de traitement sont adaptés pour ne pas prendre en compte ladite participation lorsque ladite donnée de datation est représentative d'une date antérieure à une date de référence contenue dans le dispositif et pour effacer de ladite mémoire, à chaque changement de ladite date de référence, lesdites informations représentatives de valeurs numériques variables précédemment mémorisées.

Suivant une première forme de réalisation de l'invention, ladite date de référence est constituée par la donnée de datation la plus récente associée à une valeur numérique précédemment mémorisée et les moyens de validation sont adaptés pour valider ladite participation si la donnée de datation déchiffrée est identique ou postérieure à ladite date de référence.

De préférence, ladite valeur numérique est un numéro d'ordre et lesdits moyens de traitement sont adaptés pour valider ladite participation si, dans le cas d'une date identique, le numéro d'ordre déchiffré et le dernier numéro d'ordre mémorisé obéissent à une relation d'ordre mémorisée dans le dispositif.

Ainsi, les utilisateurs ne pourront introduire des informations dans leur dispositif que dans l'ordre chronologique voulu par le diffuseur de ces informations. De préférence, il est prévu que, pour une période donnée (date), les utilisateurs ne peuvent se faire attribuer une récompense pour leurs participations que s'ils font la démarche nécessaire dans un délai déterminé. Pour ce faire, les moyens de traitement sont programmés pour émettre un code de sortie qui soit représentatif des seules participations validées à la date la plus récente mémorisée. Cette date figure sous forme chiffrée dans le code de sortie, ce qui assure une certification du gain obtenu avec le dispositif. Le montant de ce gain peut être la somme d'un nombre de points obtenus pour chaque validation et/ou être calculé par les moyens de traitement en fonction, par exemple, du nombre de participations validées pour une date donnée, et figure également sous forme chiffrée dans le code de sortie.

En d'autres termes, l'utilisateur d'un dispositif verra chacune de ses participations validée à condition que les informations chiffrées soient chargées dans le dispositif dans l'ordre prescrit, cet ordre étant porté à la connaissance des utilisateurs par des moyens appropriés (affichage, annonces, etc...) qui ne font pas partie de la présente invention. Le risque de fraude est assez faible car un utilisateur qui chercherait à entrer systématiquement des informations aléatoires dans son dispositif en vue de casser les méthodes de chiffrement utilisées ne pourrait espérer gagner plus qu'un utilisateur qui participerait à tous les "tirages".

Cependant, il est nécessaire de s'assurer qu'un utilisateur ne pourra pas gagner en entrant plusieurs fois la même information chiffrée. Le dispositif doit donc être capable de garder la trace des valeurs numériques qui ont été précédemment validées. Si les informations chiffrées qui sont diffusées ne contiennent aucune donnée de datation, le dispositif doit mémoriser la totalité des valeurs numériques. Ceci conduit à utiliser des mémoires de taille très importante si l'on veut que le dispositif soit utilisable sur de longues périodes (plusieurs mois à plusieurs années). Le coût du dispositif peut s'en trouver grevé de façon prohibitive.

Le dispositif selon la première forme de réalisation de l'invention permet de réduire considérablement la taille mémoire nécessaire car les moyens de traitement sont adaptés pour ne conserver en mémoire que l'ensemble des valeurs numériques associées à la date en cours ainsi que le code représentatif de cette date, toute valeur numérique associée à une date antérieure étant rejetée par le dispositif. Néanmoins, il existe toujours un risque non négligeable de voir le dispositif rendu à peu près inopérant par l'introduction accidentelle d'une information chiffrée aléatoire qui serait prise en compte par les moyens de traitement et inclurait une donnée de datation bien postérieure à la date en cours. En outre, dans une telle configuration, la sécurité veut que le code de sortie comporte la date à laquelle le gain a été obtenu et que, par conséquent, le gain soit effacé à chaque introduction d'une information chiffrée portant une nouvelle date. L'utilisateur doit donc se faire créditer son gain auprès d'un organisme habilité avant chaque changement de date, ce qui limite sensiblement les possibilités d'exploitation du dispositif.

Pour pallier ces inconvénients, selon une seconde forme de réalisation préférée de l'invention, le dispositif comprend une horloge couplée aux moyens de traitement pour délivrer une date de référence absolue, les moyens de traitement étant adaptés pour autoriser ladite comparaison de la valeur numérique variable déchiffrée avec les valeurs numériques variables précédemment mémorisées lorsqu'il y a coïncidence entre la donnée de datation et la date de référence absolue. Ainsi, le dispositif ne nécessite qu'une taille mémoire limitée au nombre maximal d'informations susceptibles d'être introduites dans le dispositif pendant une période (date) donnée et celui-ci est en outre protégé contre la prise en compte et la validation d'informations qui porteraient une date postérieure à la date en cours.

Suivant une autre caractéristique de l'invention, ladite mémoire comprend au moins une unité mémoire formant une table dont les emplacements mémoires, dans chacun desquels est susceptible d'être stockée une information représentative d'une valeur numérique, ont pour adresses les valeurs numériques susceptibles d'être contenues dans les informations chiffrées diffusées sur ledit support d'informations. Cette solution permet de minimiser la dimension de la mémoire nécessaire pour stocker, pendant une période donnée (date), les valeurs numériques introduites dans le dispositif.

Selon une autre caractéristique, ladite mémoire comprend plusieurs unités mémoires adressables sélectivement par lesdits moyens de traitement en fonction du degré de résolution (jour, semaine, etc...) de ladite donnée de datation.

Selon une autre caractéristique, la mémoire comporte plusieurs unités mémoires adressables sélectivement par lesdits moyens de traitement en fonction d'une donnée d'ordre contenue dans ladite information chiffrée et représentative de la présence ou de l'absence d'une condition relative à l'ordre d'introduction desdites informations chiffrées dans le dispositif. C'est ainsi que la mémoire peut comporter au moins une première unité mémoire dont les emplacements mémoires sont adressables directement en réponse à la détection d'une donnée d'ordre représentative d'une absence de ladite condition et au moins une deuxième unité mémoire adressable suivant une séquence d'adressage prédéterminée en réponse à la détection d'une donnée représentative d'une condition relative à l'ordre d'introduction desdites informations chiffrées. De préférence, la deuxième unité mémoire est un registre adapté pour ne mémoriser un nouveau numéro d'ordre que si sa valeur est supérieure à celle du numéro d'ordre qui s'y trouve mémorisé.

Suivant encore une autre caractéristique, la mémoire comporte plusieurs unités mémoires adressables sélectivement par lesdits moyens de traitement en fonction d'une donnée de ladite information chiffrée qui est représentative de la nature du support (media) de ladite information chiffrée.

De préférence, les moyens de traitement comprennent au moins un compteur de gain qui est incrémenté à chaque validation d'une participation. Les moyens de traitement peuvent être adaptés pour incrémenter le compteur de gain d'une quantité fonction d'une donnée de gain contenue dans ladite information chiffrée. En variante, ou conjointement, les moyens de traitement peuvent être adaptés pour incrémenter le compteur de gain d'une quantité calculée, suivant une loi prédéterminée mémorisée dans ledit dispositif, en fonction d'une ou plusieurs autres données contenues dans l'information déchiffrée et/ou mémorisée de manière temporaire ou permanente dans le dispositif.

De préférence, les moyens de traitement comprennent également des moyens de contrôle d'erreur et/ou de cohérence pour contrôler ladite information chiffrée en fonction d'au moins un code de contrôle contenu dans ladite information.

Les moyens de traitement peuvent comprendre également des moyens pour traiter, suivant une règle prédéterminée, en fonction d'au moins une donnée secrète mémorisée dans le dispositif, une donnée aléatoire introduite dans le dispositif, et pour mémoriser une information représentative du résultat dudit traitement. Cette caractéristique permet de réaliser une loterie qui, par exemple, sera réservée aux seuls utilisateurs qui auront répondu à certains critères, par exemple ceux qui auront introduit dans leur dispositif toutes les informations chiffrées qui auront été mises à leur disposition sur une période (date) donnée. Le tirage pourra résulter, par exemple, d'un traitement suivant une loi prédéterminée de la donnée aléatoire en fonction d'un numéro d'identification interne mémorisé de façon permanente dans le dispositif. Les utilisateurs ayant gagné à cette loterie pourront ainsi bénéficier de récompenses plus importantes (gros lots).

Selon une autre caractéristique de l'invention, les moyens de traitement comprennent des moyens pour débiter et authentifier, en liaison avec un organisme habilité, des gains comptabilisés dans le dispositif, lesdits moyens de débit et d'authentification étant adaptés pour délivrer un code de sortie composite par codage, suivant un premier algorithme donné en fonction d'une information de commande externe comprenant un nombre aléatoire et délivrée à partir dudit serveur, dudit gain débité, de ladite date de référence et d'un code d'identification propre au dispositif et mémorisé dans des moyens de mémorisation, ledit organisme habilité étant adapté pour effectuer, au moyen dudit nombre aléatoire, suivant un second algorithme corrélé au premier algorithme, un calcul sur ledit code de sortie composite pour décoder ledit gain et calculer un code d'identification externe, ledit gain étant authentifié lorsqu'il y a cohérence dudit code d'identification externe avec une information de contrôle connue du serveur et que ladite date de référence est valide. De préférence, ladite information de commande comprend le montant du gain que l'utilisateur souhaite voir débité de son dispositif et les moyens de traitement comprennent des moyens pour comparer le gain mémorisé dans ledit compteur au gain à débiter et pour décrémenter ledit compteur en fonction du résultat de ladite comparaison.

Suivant une forme particulière de réalisation de l'invention, un compteur de gain est associé à chaque support de ladite information chiffrée et ladite information de commande comprend une donnée représentative dudit support, ledit gain étant celui comptabilisé dans le compteur identifié par ladite donnée.

Suivant une caractéristique les moyens de traitement comprennent des moyens pour inhiber les moyens de validation en réponse à la délivrance dudit code de sortie composite et pour rendre opérationnel lesdits moyens de validation et débiter ledit compteur de gain en réponse à l'introduction dans ledit dispositif d'un code de déblocage délivré par ledit serveur lorsque ledit gain est authentifié.

L'interface d'entrée du dispositif peut être constituée d'un ou plusieurs moyens tels qu'un clavier numérique ou alphanumérique, des moyens de réception optique pour la lecture desdites informations chiffrées à partir d'un écran d'affichage, des moyens de lecture d'un code barres.

L'interface de sortie peut être constituée par un simple écran d'affichage, par exemple à cristaux liquides. Toutefois, le dispositif peut comporter également des moyens de transmission de tout type approprié, que ce soit sous forme optique, électrique, radioélectrique, acoustique ou autre, avec ou sans connexion matérielle amovible avec le serveur, pour transmettre à ce dernier le code composite précité.

De préférence, ladite mémoire de stockage des informations représentatives desdites valeurs numériques est une mémoire vive et les moyens de traitement sont constitués par un micro-calculateur programmé. Suivant une forme préférée de réalisation, le micro-calculateur, ses mémoires vives et mortes et leur bus de liaison sont réalisés sur une même pastille de semi-conducteurs suivant la technique dite "monochip".

D' autres caractéristiques et avantages de l'invention résulteront de la description qui va suivre d'un exemple de réalisation illustré par les dessins annexés sur lesquels :

La figure 1 est un schéma synoptique simplifié d'un dispositif portable électronique selon une première forme de réalisation de l'invention.

La figure 2 est une vue en plan du boîtier du dispositif de la figure 1.

La figure 3 est une vue suivant la flèche III, figure 2.

La figure 4 est un schéma illustrant l'utilisation du dispositif selon l'invention en liaison avec un poste récepteur de télévision.

La figure 5 est un diagramme fonctionnel illustrant la mise en oeuvre de jeux ou similaires au moyen du dispositif selon l'invention.

La figure 6 est un schéma illustrant la fonction d'authentification des gains réalisée avec le dispositif de l'invention.

La figure 7 est une vue schématique en perspective d'un dispositif portable électronique selon une seconde forme de réalisation de l'invention.

La figure 8 est un schéma synoptique simplifié du dispositif de la figure 7.

La figure 9 est une vue en plan du boîtier d'un dispositif portable électronique selon une troisième forme de réalisation de l'invention.

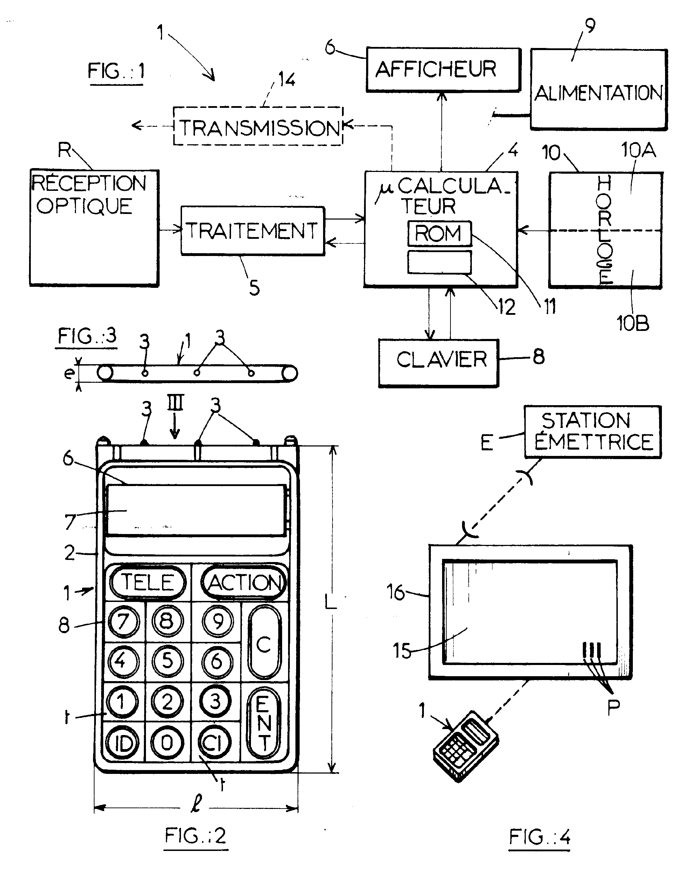

En se reportant aux dessins, notamment aux figures 1 à 3, on peut voir un dispositif portable électronique 1 permettant la mise en oeuvre d'opérations essentiellement destinées à fidéliser une clientèle ou un public à un media, à un service, à un produit ou autres.

Dans la suite de la description, on appellera "jeu" l'utilisation qui est ainsi faite du dispositif.

Un dispositif de structure similaire est décrit en détail dans les demandes de brevets français 2 630 561 et 89 06848 auxquelles on pourra se référer. Ce dispositif comprend un boîtier extérieur 2 de forme parallélépipédique rectangle, de préférence en matière plastique, et dont l'épaisseur e (figure 3) est faible par rapport à sa largeur l et sa longueur L. De préférence, la taille du boîtier est adaptée pour que celui-ci puisse être tenu dans une main.

Le dispositif comprend des moyens de réception optique R avantageusement constitués par des phototransistors 3 (figures 2 et 3) disposés sur la tranche du petit côté du boîtier 2, et en particulier alignés. Dans l'exemple considéré, les phototransistors sont au nombre de trois.

En variante, ou en sus des phototransistors destinés à la lecture d'informations sur un écran vidéo, le dispositif 1 peut être équipé d'un lecteur classique de code barres. Ce type de lecteur est parfaitement conventionnel et n'a pas été représenté sur le dessin. Dans la suite, on supposera donc, sauf s'il en est disposé autrement, que les moyens de réception optique R désignent indifféremment le système à trois phototransistors 3 précités ou le lecteur de code barres.

Les moyens de réception R, corne illustré sur la figure 1, sont reliés à un micro-calculateur 4, par l'intermédiaire d'un circuit adaptateur 5. S'agissant du système à trois phototransistors, le circuit adaptateur 5 est adapté pour réaliser, comme décrit dans la demande de brevet français 2 630 561 précitée, une auto-adaptativité à un écran de terminal ou de récepteur de télévision.

Le dispositif 1 comprend un afficheur 6, de préférence à cristaux liquides (LCD) formant un écran rectangulaire (figure 2 sur le boîtier). De préférence, cet écran 7 est prévu pour afficher huit caractères alphanumériques, alignés. L'afficheur 6 permet de visualiser des informations provenant du micro-calculateur.

Une source d'énergie électrique 9, généralement constituée par une pile électrique de dimensions réduites, est prévue pour alimenter divers circuits. De préférence, cette pile est noyée dans le boîtier lors de la fabrication du dispositif de manière à être rendue inaccessible et à interdire son remplacement ainsi que tout accès aux conducteurs d'alimentation des différents circuits électroniques du dispositif, également noyés dans le boîtier 2.

Le dispositif comporte encore un clavier 8 notamment constitué, comme représenté sur la figure 2, par des touches t dont dix d'entre elles correspondent respectivement aux chiffres 0 à 9. Le clavier 8 est complété par un certain nombre de touches de fonction, à savoir :
- une touche "TELE" qui permet de passer en mode optique pour le téléchargement d'une information chiffrée depuis un écran ; en variante, cette touche peut être supprimée si le micro-calculateur 4 est programmé pour être activé par des interruptions provenant des moyens de réception optique R et de traitement 5 ;
- une touche "C" qui permet d'effacer une entrée de donnée erronée ;
- une touche "ENT" qui permet d'accepter une entrée de donnée ;
- une touche "ACTION" qui permet de passer en mode jeu, pour la mise en oeuvre de jeux ne nécessitant pas la réception de données par les moyens R ;
- une touche "CL" qui permet d'afficher sur l'écran 7 des gains réalisés avec le dispositif ;
- une touche "ID" qui permet de passer en mode identification si le dispositif est équipé de cette fonction et de mettre en oeuvre une procédure manuelle de certification et d'authentification.

Le micro-calculateur 4 est un micro-calculateur masqué, en technologie CMOS. Il peut être du type MC68HC05B6, de MOTOROLA, pour une version micro-calculateur auto-programmable, ou du type MEC 75308 pour une version à mémoire de stockage RAM, ou alors du type circuit spécifique (ASIC) pour une version à RAM protégée. Le circuit spécifique sera développé à partir d'un micro-calculateur standard des types précédents dans lesquels on inclura des moyens de protection de la mémoire. Ces moyens de protection pourront être constitués par un fusible grillé après écriture de la mémoire.

Le micro-calculateur comporte une mémoire morte (ROM) 11 et une mémoire de stockage 12. La mémoire morte 11 est organisée en deux zones, à savoir :
- une zone programme dans laquelle sont stockées les instructions relatives à :
   - la fonction de décodage et réception optique;
   - la fonction éventuelle d'identification ;
   - la fonction d'authentification ;
   - la fonction personnalisation du dispositif ;
   - les fonctions applicatives permettant la mise en oeuvre des jeux qui seront décrits ci-après ;
- et une zone fabrication pour mémoriser les informations relatives à la fabrication du dispositif et pour initialiser le produit, ces informations concernant :
   - le code client, étant entendu que le client ne désigne pas l'utilisateur final ;
   - le numéro du masque utilisé pour le micro-calculateur ;
   - la clé de fabrication, notamment constituée par 128 bits, permettant le contrôle de la personnalisation.

La mémoire de stockage 12 du dispositif contient deux catégories de données, à savoir :
- des données d'exploitation pour le stockage d'informations concernant les jeux et/ou paris mis en oeuvre avec le dispositif, ou d'autres applications si la mémoire morte est programmée à cet effet ; et
- des données de personnalisation contenant les informations relatives :
   - au code confidentiel, si la fonction d'identification est programmée en mémoire morte ;
   - à la clé secrète d'authentification;
   - aux paramètres d'exploitation (par exemple blocage de la carte au bout de quatre essais infructueux d'identification) ;
   - la ou les diverses clés secrètes de déchiffrement nécessaires pour la mise en oeuvre de jeux au moyen du dispositif ;
   - la durée de vie autorisée du dispositif.

La mémoire de stockage 12 peut être une PROM ou une EEPROM, ou avantageusement une RAM sauvegardée par la source d'alimentation. La mémoire RAM est inaccessible de l'extérieur du dispositif et toute tentative provoque l'effacement des informations qui y sont inscrites et rend le dispositif inutilisable. Les données de personnalisation y sont stockées une fois pour toutes, les données d'exploitation sont modifiables. La protection des données de personnalisation en mémoire RAM 12 résulte de la simple programmation structurée du micro-calculateur 4.

Le bus de données et le bus d'adresses (non représentés sur les dessins) du micro-calculateur 4 ne sont pas accessibles de l'extérieur, de manière à rendre impossible une lecture ou une modification frauduleuse, depuis l'extérieur, des informations contenues dans la mémoire morte 11 et la mémoire de stockage 12 du dispositif 1.

Si le micro-calculateur 4 est programmé pour assurer une fonction d'identification, le dispositif ne peut être rendu actif qu'après actionnement de la touche ID et introduction, sur le clavier 8, d'un code confidentiel PIN d'identification de l'utilisateur du dispositif. Ce code confidentiel est connu seulement du titulaire du dispositif 1. Le programme stocké dans la mémoire 11 peut en outre être prévu pour bloquer le dispositif 1 après entrée consécutive d'un certain nombre de codes confidentiels erronés sur le clavier 8, par exemple quatre codes. Le dispositif 1 devient alors inutilisable et la réactivation du dispositif ne peut être assurée que par une procédure spéciale, par exemple dans un centre serveur.

De manière facultative, le dispositif 1 peut être pourvu de moyens 14 de transmission de données vers l'extérieur, notamment vers un serveur, en vue de l'authentification et de l'attribution à l'utilisateur du dispositif des gains qu'il a obtenus avec celui-ci. Ces moyens de transmission peuvent être de nature optique, électrique, radioélectrique, acoustique ou autres et revêtir toute forme appropriée connue des spécialistes de la technique. En variante, la transmission de données vers l'extérieur du dispositif peut être assurée par la lecture d'informations affichées sur l'afficheur 6 au moyen d'un dispositif spécialement adapté à cet effet, par exemple un dispositif tel que décrit dans la demande de brevet français 89 10201.

En dehors de l'horloge système (non représentée) propre au micro-calculateur 4, le dispositif 11 est également équipé d'une horloge 10. Cette horloge peut être constituée par exemple d'une base de temps 10A et d'un compteur 10B alimentés en permanence par la source d'alimentation 9. A chaque débordement de son contenu, c'est-à-dire à intervalles réguliers, le compteur 10B émet une impulsion de réveil du micro-calculateur 4. Celui-ci incrémente le temps écoulé depuis la parsornalisation du dispositif et repasse ensuite à l'état de veille jusqu'à l'apparition de l'impulsion suivante en provenance du compteur 10B. Lorsque la durée de vie autorisée du dispositif est écoulée, cette information étant mémorisée dans la mémoire 12 lors de la personnalisation du dispositif, le micro-calculateur 4 est programmé pour inhiber automatiquement le fonctionnement du dispositif 1, par exemple par effacement du contenu des informations de personnalisation dans la mémoire 12.

L'horloge 10 a également pour rôle de fournir au micro-calculateur 4 une date de référence absolue, à savoir le jour et la semaine en cours, qui sont matérialisés par des codes numériques. Les codes de date en cours sont mémorisés dans la mémoire 12 lors de la personnalisation du dispositif et sont ensuite actualisés comme décrit ci-dessus. Le code 5 de la semaine change chaque semaine suivant une loi prédéterminée, tandis que le code J du jour est cyclique. La connaissance d'une date de référence absolue permet au micro-calculateur 4 de valider la participation d'un individu à un tirage, ce terme étant défini ci-après.

Cette date de référence absolue peut également être utilisée lors de la procédure d'authentification des gains, qui sera décrite dans la suite.

Le dispositif qui vient d'être décrit est destiné à permettre à son utilisateur de participer à des jeux en introduisant dans celui-ci des informations chiffrées qui sont mises à sa disposition dans la presse, à la télévision, à la radio, sur des affiches publicitaires, sur des produits se trouvant exposés dans des points de vente, etc... Dans la suite, on appellera medias ces différents supports, un jeu "multi-media" désignant un jeu qui fait appel à la lecture d'informations chiffrées sur plusieurs medias de natures différentes.

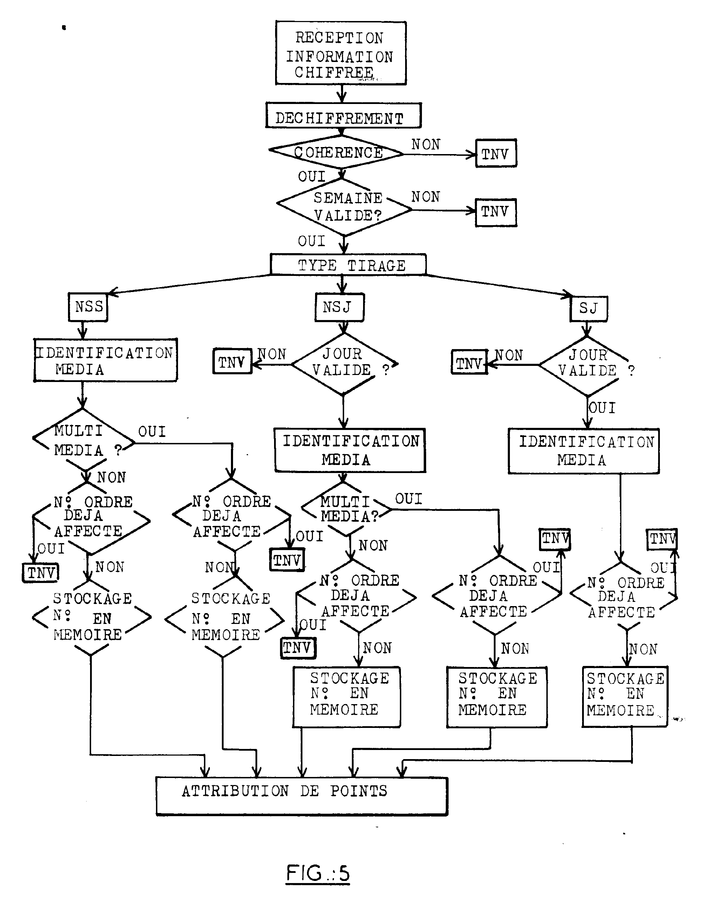

La mise en oeuvre de jeux au moyen du dispositif selon l'invention sera maintenant décrite en se référant également à la figure 5. Dans la suite, l'opération consistant à introduire une information chiffrée telle qu'un nombre dans un dispositif, information qui sera ou non validée et donnera éventuellement lieu à un calcul de gain, sera appelée "tirage". Cette notion de tirage n'implique pas une intervention du hasard : tout utilisateur introduisant dans son dispositif une information chiffrée qui lui est fournie à cet effet par un media verra sa participation au jeu validée et un gain lui être éventuellement attribué. Néanmoins, dans une forme particulière de réalisation de l'invention, lorsque l'utilisateur a rempli certaines conditions (participation à un nombre de tirages minimal par exemple), le micro-calculateur est programmé pour traiter une information arbitraire de format donné introduite par l'utilisateur, permettant de sélectionner ainsi des utilisateurs qui pourront bénéficier de récompenses ou gains supérieurs à ceux auxquels ils avaient droit par leur seule participation.

Pour participer aux jeux organisés et effectuer des tirages, au sens de ce mot excluant toute intervention du hasard, l'utilisateur doit simplement regarder la télévision, écouter la radio, lire certains journaux, etc..., pendant des périodes définies (jour, semaine), et introduire dans le dispositif des informations chiffrées délivrées par ces medias.

Le clavier permet à l'utilisateur d'introduire une information lue ou entendue sur tout media (télévision, radio, journal, revue, affiche, articles en vente dans un magasin, etc...). Les moyens de réception optique à phototransistors permettent de lire optiquement une information chiffrée sur un écran vidéo de type télévision, télématique, ou autre moniteur accessible au public. Cette information est par exemple transmise par une station émettrice E, à un récepteur de télévision 16 set elle s'affiche sur l'écran 15 de celui-ci sous forme de pavés lumineux P (figure 4) et elle est téléchargée dans le dispositif 1 en actionnant la touche "TELE" et en plaquant les phototransistors 3 contre les pavés lumineux. Ce mode de téléchargement a été décrit dans la demande de brevet français 2 630 561 à laquelle on pourra se reporter. Enfin, le lecteur de code barres permet de lire des informations imprimées sur un journal, une revue, des articles en vente dans un magasin, etc...

Les informations chiffrées mises à la disposition des utilisateurs sur ces différents supports ou medias comportent un format prédéfini et un certain nombre de champs susceptibles d'être reconnus par le dispositif. Le chiffrement de l'information peut faire appel à l'une des nombreuses méthodes mathématiques bien connues des spécialistes du chiffrement.

L' information chiffrée introduite par l'intermédiaire de l'interface utilisateur est appliquée sous forme d'un nombre binaire au micro-calculateur 4, après traitement et/ou conversion par des moyens classiques appropriés si elle se présente sous une autre forme, par exemple sous forme numérique ou alphanumérique pour une introduction au clavier. Le micro-calculateur 4, qui est programmé de manière classique à cet effet, procède alors au déchiffrement de l'information grâce à la ou aux clés secrètes de déchiffrement mémorisées dans la mémoire 12.

Le micro-calculateur 4 examine ensuite si le message déchiffré est cohérent grâce à un code de contrôle de cohérence CCC contenu dans ce message. Ce code CCC permet de vérifier que l'information reçue n'est pas simplement une suite de chiffres choisis au hasard. Les méthodes permettant de contrôler la cohérence de messages sont extrêmement classiques, par exemple dans le domaine de l'informatique et des télécommunications, et il n'y a pas lieu d'en donner ici une description détaillée. Si le message est déclaré non cohérent par le micro-calculateur 4, il est rejeté et le tirage n'est pas valide.

Dans le cas contraire, le code représentatif de la semaine contenu dans le message déchiffré est comparé avec le code S de la semaine en cours élaboré par le micro-calculateur 4 en liaison avec l'horloge 10. Si les codes ne coïncident pas, le tirage est rejeté.

Si les codes semaine coïncident, le micro-calculateur 4 détermine quel est le type de tirage concerné. Dans le présent exemple de réalisation, les tirages sont distingués suivant que les informations doivent ou non être introduites dans le dispositif dans l'ordre de leur apparition sur les medias et suivant la durée de la période pendant laquelle les informations fournies à l'utilisateur peuvent être introduites dans le dispositif. Cependant, d'autres critères de distinction des tirages peuvent naturellement être utilisés.

Dans l'exemple de la figure 5, il existe trois types de tirages :
- le tirage "non séquencé semaine" NSS signifie que les informations chiffrées relatives à ce type de tirage peuvent être introduites dans n'importe quel ordre pendant une semaine donnée. Ce type de tirage est de préférence lié à la distribution ou au commerce ;
- le tirage "non séquencé jour" NSJ signifie que les informations chiffrées relatives à ce type de tirage peuvent être introduites dans le dispositif dans n'importe quel ordre pendant un jour donné. Ce type de tirage est de préférence lié à la presse ; et
- le tirage "séquencé jour" SJ signifie que les informations chiffrées relatives à ce type de tirage doivent être introduites dans le dispositif dans l'ordre de leur fourniture aux utilisateurs, et ceci pendant une journée donnée. Ce dernier type de tirage est de préférence réservé aux media audiovisuels (radio, télévision, télématique).

Si, dans l'information déchiffrée, le code tirage correspond à un tirage non séquencé semaine NSS, le micro-calculateur 4 identifie dans cette information la nature du media ayant servi de support à l'information chiffrée. Le micro-calculateur détermine ensuite, au moyen d'un autre code de l'information déchiffrée, si le tirage est du type "multi-media" ou non. Un tirage est du type multi-media s'il implique que les gains de l'utilisateur dépendent de l'introduction par celui-ci d'informations chiffrées en provenance de plusieurs medias de natures différentes.

Dans la négative le micro-calculateur compare un numéro d'ordre contenu dans l'information déchiffrée aux numéros d'ordre précédemment mémorisés, pour la semaine en cours, dans une table de la mémoire 12 contenant tous les numéros d'ordre des informations chiffrées introduites dans le dispositif depuis le début de la semaine en cours, quelle que soit la nature des medias ayant diffusé ces informations. Comme le nombre maximal de numéros d'ordre susceptibles d'être émis et mémorisés pendant une période donnée (jour, semaine) est connu, ce nombre est celui des emplacements mémoires de la table et ces emplacements ont pour adresses les différents numéros d'ordre possibles. Cette configuration permet de minimiser la taille mémoire nécessaire pour mémoriser les numéros d'ordre. Le contenu de cette table est effacé par le micro-calculateur 4 à chaque changement de semaine.

Si le numéro d'ordre n'a pas encore été affecté, il est stocké en mémoire et le micro-calculateur 4 incrémente d'un certain nombre de points un compteur de gains. Ce nombre de points est contenu sous forme codée dans l'information déchiffrée mais, en variante, pourrait être calculé en fonction de l'information déchiffrée sur la base d'un ou plusieurs critères tels que la nature du media, le numéro de la semaine, etc...

Dans l'hypothèse où le tirage serait du type non séquencé semaine et multi-media, le micro-calculateur compare le numéro d'ordre au contenu d'une table affecté au media qui a été identifié. Il y a donc, dans ce cas, une table des numéros d'ordre pour chacun des médias du tirage multi-media. De même que dans le cas précédent, le tirage n'est pas validé si le numéro d'ordre contenu dans l'information déchiffrée a déjà été mémorisé dans la table (le contenu de cette table est également effacé à chaque changement de semaine). Si tel n'est pas le cas, le nouveau numéro d'ordre est mémorisé dans la table. Les gains consécutifs aux tirages multi-media seront comptabilisés dans le compteur de gain et la participation effective à des tirages en provenance de plusieurs medias différents aura pour effet d'accroître ces gains selon des règles programmées dans le micro-calculateur. Les gains obtenus par un utilisateur à la fin d'un tirage multi-media seront fonction, par exemple, du nombre de tirages réalisés pour chaque media, suivant des critères qu'il n'entre pas dans le cadre de la présente invention de décrire en détail.

Si le tirage identifié est du type non séquencé jour NSJ, le micro-calculateur vérifie si le code jour de l'information déchiffrée correspond au code j du jour en cours selon l'horloge du dispositif. Dans la négative, le tirage n'est pas validé. Si le jour est validé, le processus de contrôle se poursuit, à partir de l'identification du media, de la même manière que celle décrite à propos du tirage non séquencé semaine. Si le tirage non séquencé jour NSJ, du type multi-media ou non, est validé, les points obtenus sont incrémentés dans le compteur de gain comme décrit précédemment à propos du tirage non séquencé semaine. La ou les tables mémorisant les numéros d'ordre sont dans ce cas effacées à chaque changement de jour.

Enfin, dans le cas d'un tirage séquencé jour SJ, le micro-calculateur 4 commence par déterminer si le code jour de l'information déchiffrée reçue est valide. Dans la négative le tirage est refusé et, dans l'affirmative, le micro-calculateur procède à l'identification du media puis compare le numéro d'ordre de l'information déchiffrée reçue aux numéros d'ordre déjà mémorisés dans une table affectée au media identifié. Le contenu de cette table est effacé à chaque changement de jour. Le tirage est rejeté si le numéro d'ordre reçu est inférieur ou égal au dernier numéro mémorisé dans la table. Dans le cas contraire, le compteur de gain est incrémenté d'un nombre de points déterminé comme décrit précédemment.

Il résulte de ce qui précède qu'un utilisateur voit sa participation à un tirage validée et un gain lui être affecté chaque fois qu'il introduit dans son dispositif une information chiffrée dans les conditions prescrites, l'obtention d'un gain minimal pouvant, en variante, être subordonné à l'introduction d'informations en provenance de plusieurs medias différents dans le cas d'un tirage multi-media.

L'existence d'une date de référence absolue élaborée dans le dispositif et la mémorisation dans ce dernier des numéros d'ordre correspondant aux informations chiffrées introduites successivement pendant la date de référence interdisent à un utilisateur d'acquérir des points en introduisant plusieurs fois la même information chiffrée dans son dispositif. Bien entendu, à chaque changement de date (jour et semaine) les tables correspondantes sont remises à zéro afin d'autoriser des tirages pendant la période suivante. Afin de tenir compte des dérives possibles des horloges des dispositifs, ces derniers sont neutralisés, à chaque changement de date, pendant un temps calculé en fonction de la dispersion de ces dérives sur toute la durée de vie des dispositifs. Cette dernière est limitée à une valeur prédéterminée, par exemple 128 semaines, par programmation du micro-calculateur 4.

A un moment déterminé ou choisi par l'utilisateur, par exemple lorsque le compteur de gain a atteint un nombre de points prédéterminé, son utilisateur peut faire débiter de son dispositif tout ou partie des points acquis et créditer ceux-ci auprès d'un organisme habilité, ce qui lui donnera droit à une récompense (lot, réduction sur des articles ou services, etc...).

Cette procédure permettant à l'utilisateur de voir un certain nombre de points crédité auprès de l'organisme habilité et le compteur de gain de son dispositif débité du nombre de points correspondants sera appelée dans la suite procédure de débit et d'authentification. La procédure d'authentification est semblable à celle décrite dans la demande de brevet français 89 06848 à laquelle on pourra se référer pour de plus amples détails.

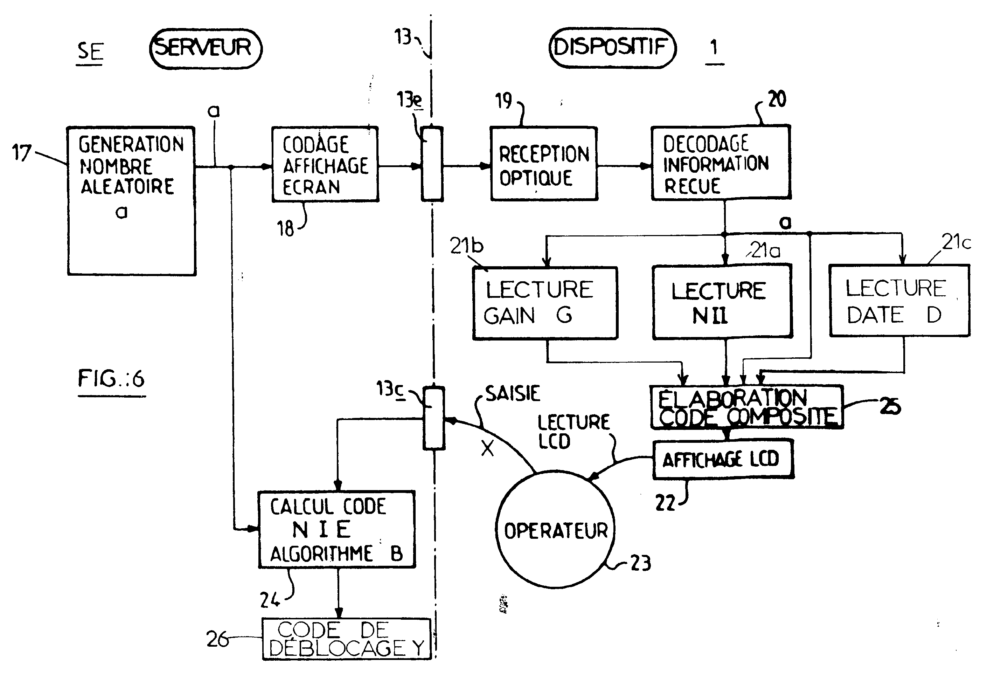

La figure 6 est un schéma fonctionnel illustrant la fonction de débit et d'authentification mise en oeuvre par voie optique. La partie gauche de cette figure correspond à l'automate de communication d'un serveur SE. La partie située à droite du trait mixte (lequel schématise un terminal 13 du serveur SE) correspond au dispositif 1.

Le bloc 17 correspond à l'élaboration par le serveur SE d'une information de commande comprenant le nombre de points que l'utilisateur souhaite débiter de son dispositif et un nombre aléatoire a. Le bloc 18 correspond au codage et à l'affichage de ce nombre sur l'écran 13e du terminal. Le bloc 19 correspond à la réception optique des données par les phototransistors 3 du dispositif 1. Le bloc 20 correspond au décodage, par le micro-calculateur 4, des données reçues. Les blocs 21a, 21b et 21c correspondent à la lecture par le micro-calculateur 4 respectivement d'un numéro d'identification interne NII du dispositif, du gain G et de la date D. Le bloc 21b correspond également à la comparaison du gain G stocké dans le compteur et du nombre de points que l'utilisateur souhaite voir débités. Si G est supérieur au nombre de points demandé, ce nombre est pris en compte. Dans le cas contraire, soit la procédure peut être interrompue, soit le contenu du compteur de gain G est pris en compte.

Le bloc 25 correspond au calcul par le micro-calculateur 4 d'un code composite x à partir du code NII, du nombre de points débités, de la date D contenue dans le dispositif et du nombre aléatoire reçu a, suivant un algorithme A. Le bloc 22 correspond à l'affichage sur l'écran 7 du dispositif 1 du code composite x calculé en 25. A partir de cet instant le dispositif 1 est bloqué et ne peut plus être utilisé pour de nouveaux tirages tant qu'il n'a pas été débloqué.

L'utilisateur, schématisé par un cercle 23, après lecture sur l'écran 7, introduit sur le clavier 13c du terminal 13 le code affiché X sur l'écran 7.

Le bloc 24 correspond, dans le serveur S, à un calcul effectué, au moyen du nombre aléatoire a suivant un algorithme B corrélé à l'algorithme A, sur le code composite X pour décoder le nombre de points débités et la date D et calculer un code d'identification externe NIE, ledit nombre étant validé lorsque la date D est correcte et qu'il y a cohérence du code d'identification externe NIE avec une information de contrôle connue du serveur. Si l'algorithme a est symétrique de l'algorithme A, les codes NIE et NII sont égaux en cas de cohérence.

Si la cohérence est établie, le nombre de points ainsi validé est crédité par le serveur au possesseur du dispositif, lequel est identifié, par exemple, par le code NIE. En cas d'absence de cohérence, le résultat n'est pas affecté.

La cohérence peut être établie, par exemple, par traitement sur le code NIE, en fonction de règles de codage prédéterminées, et/ou par corrélation du code NIE avec une information externe entrée par l'utilisateur dans le serveur, par exemple le numéro de série de la carte, le nom de l'utilisateur, un mot de passe, etc...

Le bloc 26 correspond à l'affichage sur le terminal du serveur SE d'un code Y de déblocage du dispositif 1. Le serveur SE émet ce code si l'authentification a été positive. L'utilisateur l'introduit par le clavier 8 de son dispositif, ce qui a pour effet de le débloquer et de débiter le compteur de gain du nombre de points crédités auprès du serveur. Le dispositif affiche alors sur l'écran 7 un message informant l'utilisateur qu'il est prêt à être réutilisé.

Si le dispositif 1 n'est pas équipé des moyens de réception optique à phototransistors, la procédure d'authentification peut être mise en oeuvre par voie téléphonique. L'utilisateur appelle le serveur au téléphone et, après être entré en contact avec une opératrice, annonce le numéro de série de son dispositif qui figure en clair sur celui-ci et indique le nombre de points à débiter. L'opératrice lui fournit l'information de commande qu'elle lit sur l'écran du système informatique d'authentification (serveur). Le joueur entre cette information de commande dans son dispositif et obtient en retour le code alphanumérique X sur l'afficheur du dispositif.

L'utilisateur lit le code X sur l'écran 7 et le transmet à l'opératrice qui le frappe sur le clavier du système informatique d'authentification. Ce dernier indique à l'opératrice si la carte et le gain sont authentifiés ou non puis, en cas d'authentification positive, fournit le code Y de déblocage. L'opératrice retransmet ce code Y de déblocage à l'utilisateur qui l'entre dans son dispositif. Ce code Y a pour effet de débloquer le dispositif et de débiter le compteur de gain du nombre de points choisi par l'utilisateur. Le dispositif affiche alors un message informant l'utilisateur qu'il est prêt à être réutilisé.

En variante, le dispositif 1 peut comporter un compteur de gain associé à chaque support. Dans ce cas, lors de la procédure de débit et d'authentification, l'utilisateur indique la nature du support (media) pour lequel il veut être débité d'un certain nombre de points. Ceci permet à l'organisme habilité d'effectuer une mesure de fidélité pour chaque type de support.

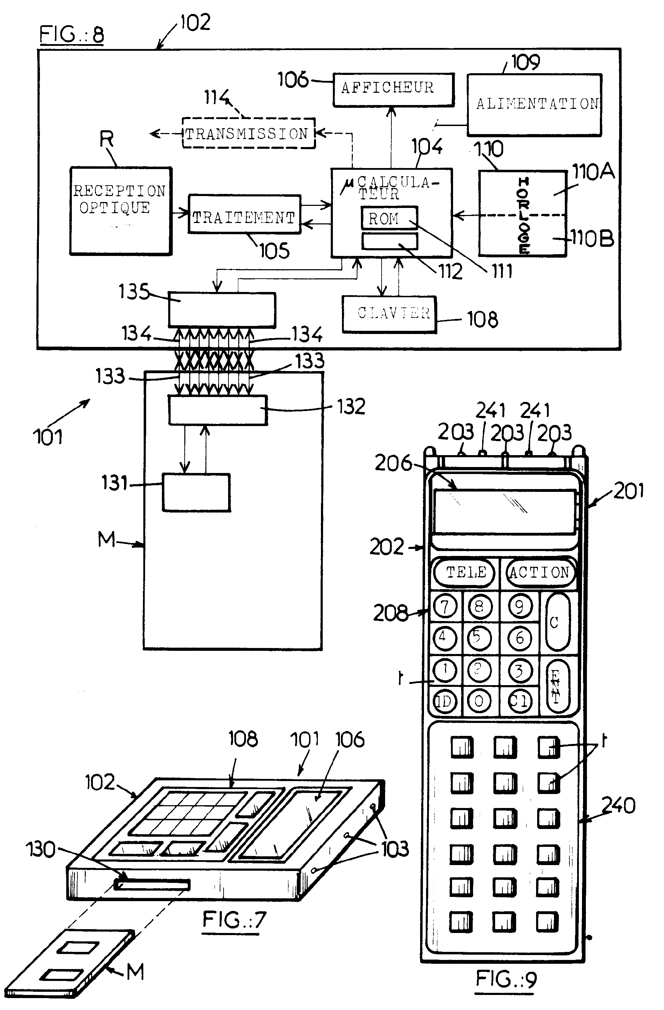

Selon une seconde forme de réalisation de l'invention illustrée aux figures 7 et 8 (sur lesquelles les numéros de référence des figures 1 à 6, augmentés du nombre 100, désignent des éléments correspondants), le dispositif portable électronique 101 est scindé en deux sous-ensembles, à savoir le boîtier 102 dont les différents composants sont alimentés électriquement par la source d'alimentation 109, et un sous-ensemble amovible M dépourvu de source d'alimentation propre, tel qu'une carte à microcircuits, qui peut être inséré dans une fente 130 du boîtier 102 pour établir une connexion électrique avec les composants de ce dernier.

Selon cette seconde forme de réalisation, la mémoire protégée destinée à stocker les différentes valeurs numériques variables ainsi que les gains de l'utilisateur est déportée dans le sous-ensemble M. Cette mémoire 131 est donc une mémoire morte programmable protégée en lecture et/ou écriture par des moyens conventionnels dans le domaine des cartes à microcircuits. La mémoire 131 est connectée par l'intermédiaire d'un circuit d'interface 132 à un certain nombre de contacts électriques 133 aptes à établir une connexion électrique avec des contacts électriques 134 du boîtier 102 lorsque le sous-ensemble M est convenablement engagé dans la fente 130. Les contacts électriques 134 sont connectés par l'intermédiaire d'un circuit d'interface 135 au micro-calculateur 104 et à la source d'alimentation électrique 109 afin d'assurer l'alimentation de la mémoire 131 et la lecture et/ou l'écriture de données dans celle-ci à partir du micro-calculateur 104.

Une fois le sous-ensemble M introduit dans le boîtier 102, le fonctionnement de l'ensemble est identique à celui décrit à propos du premier mode de réalisation des figures 1 à 6. Grâce aux dimensions particulièrement réduites que peut avoir le sous-ensemble M (il a de préférence le format d'une carte de crédit standard), l'utilisateur peut la conserver en permanence sur lui et participation à des tirages en tout lieu où un boîtier 102 est à sa disposition. L'utilisateur pourra se faire créditer les gains stockés dans son sous-ensemble M auprès d'un terminal approprié, par exemple lorsque la totalité de la capacité de la mémoire 131 aura été utilisée et que le sous-ensemble sera devenu inutilisable.

En variante, les moyens de traitement aptes à déchiffrer les informations numériques, à en extraire la valeur numérique variable, à la comparer avec les valeurs précédemment mémorisées et à valider ou non la participation peuvent également être déportés en tout ou partie dans le sous-ensemble M. De préférence, les moyens de traitement ainsi déportés sont constitués par un micro-calculateur (non représenté) connecté entre le circuit d'interface 132 et la mémoire 131.

Selon une troisième forme de réalisation de l'invention illustrée à la figure 9, le dispositif portable électronique 201 est combiné à un dispositif de télécommande de téléviseur et/ou autre appareil d'accès à un media. Le boîtier unique 202 regroupe ainsi le clavier 208 identique au clavier 8 de la figure 2, un clavier de télécommande conventionnel 240 comprenant un certain nombre de touches de fonction t et un afficheur 206 commun aux applications "participation" et "télécommande". De préférence le micro-calculateur 4 est programmé pour mettre en oeuvre ces deux applications et piloter les organes émetteurs 241 (par exemple des diodes électroluminescentes) de la télécommande, placés sur la tranche avant du boîtier 202, de même que les phototransistors 203.

La réunion du dispositif de participation dans un boîtier commun avec un dispositif de télécommande accroît son confort d'utilisation dans le cadre d'émissions télévisées.

Les seconde et troisième formes de réalisation peuvent en outre être combinées en déportant hors du boîtier 202, dans le sous-ensemble M, les fonctions de mémorisation des valeurs numériques variables et des gains, et éventuellement de traitement des données comme décrit à propos des figures 7 et 8.

## Revendications

1. Dispositif électronique de participation d'un individu à des opérations médiatiques impliquant l'introduction de données d'entrée dans ledit dispositif, sous la commande dudit individu, en réponse à une information délivrée à un public par au moins un média, comprenant des moyens de traitement de données, au moins une mémoire, au moins une interface d'entrée pour appliquer lesdites données d'entrée auxdits moyens de traitement de données, au moins une interface de sortie pour transmettre à l'extérieur du dispositif des données de sortie représentatives de la participation dudit individu auxdites opérations médiatiques, et une source d'alimentation électrique des divers circuits électriques du dispositif, caractérisé en ce que ledit dispositif est portable et en ce que, ladite information délivrée par ledit média étant une information chiffrée destinée à être introduite comme donnée d'entrée dans ledit dispositif et comprenant une valeur numérique variable, lesdits moyens de traitement de données (4 ; 104) comprennent :
- des moyens de déchiffrement de ladite information,
- des moyens pour extraire ladite valeur numérique variable de ladite information déchiffrée,
- des moyens de comparaison pour déterminer si ladite valeur numérique variable extraite coïncide avec au moins une valeur numérique variable précédemment mémorisée,
- des moyens de validation conditionnelle pour valider ladite participation et mémoriser dans ladite mémoire, pendant une période de temps déterminée, une information représentative de ladite valeur numérique variable extraite et de ladite validation si au moins une condition, comprenant l'absence de ladite coïncidence, est remplie, sinon pour interdire ladite validation, et
- des moyens pour calculer et appliquer sélectivement à ladite interface de sortie (7 ; 107) un code de sortie (X) représentatif de participations validées par lesdits moyens de validation conditionnelle.

2. Dispositif selon la revendication 1, caractérisé en ce que ladite information déchiffrée comprend une donnée de datation et lesdits moyens de traitement (4 104) sont adaptés pour extraire ladite donnée de datation et interdire la validation de ladite participation lorsque ladite donnée de datation extraite est représentative d'une date antérieure à une date de référence contenue dans le dispositif et pour effacer de ladite mémoire, à chaque changement de ladite date de référence, les informations représentatives de valeurs numériques variables précédemment mémorisées.

3. Dispositif selon la revendication 2, caractérisé en ce que ladite validation est subordonnée à la présence d'une donnée de datation identique ou postérieure à ladite date de référence, ladite donnée de datation étant mémorisée en réponse à ladite validation et ladite date de référence étant constituée par la donnée de datation la plus récente mémorisée.

4. Dispositif selon la revendication 3, caractérisé en ce que ladite valeur numérique variable extraite est un numéro d'ordre et en ce que ladite validation est subordonnée à l'existence d'une donnée de datation et d'une date de référence identiques et à l'existence entre le numéro d'ordre extrait et le dernier numéro d'ordre mémorisé d'une relation d'ordre mémorisée dans le dispositif.

5. Dispositif selon la revendication 2, caractérisé en ce que ledit dispositif (1) comprend une horloge (10) couplée aux moyens de traitement (4) pour délivrer une date de référence absolue (J, S), lesdits moyens de traitement étant adaptés pour autoriser ladite comparaison de la valeur numérique variable extraite avec la (les) valeur(s) numérique(s) variable(s) précédemment mémorisée(s) lorsqu'il y a coïncidence entre la donnée de datation extraite et la date de référence absolue (J, S).

6. Dispositif selon la revendication 5, caractérisé en ce que ladite mémoire comprend au moins une unité mémoire formant une table dont les emplacements mémoires, dans chacun desquels est susceptible d'être stockée une information représentative d'une valeur numérique variable, ont pour adresses les valeurs numériques susceptibles d'être contenues dans ladite information chiffrée.

7. Dispositif selon l'une quelconque des revendications 5 et 6, caractérisé en ce que ladite mémoire (12 ; 131) comprend plusieurs unités mémoires adressables sélectivement par lesdits moyens de traitement (4 ; 104) en fonction du degré de résolution (jour, semaine) de ladite donnée de datation extraite.

8. Dispositif selon l'une quelconque des revendications 5 à 7, caractérisé en ce que ladite mémoire (12 ; 131) comporte plusieurs unités mémoires adressables sélectivement par lesdits moyens de traitement en fonction d'une donnée d'ordre contenue dans ladite information chiffrée et représentative de la présence ou de l'absence d'une condition relative à l'ordre d'introduction desdites informations chiffrées dans le dispositif.

9. Dispositif selon la revendication 8, caractérisé en ce que ladite mémoire (12; 131) comporte au moins une première unité mémoire dont les emplacements mémoires sont adressables directement en réponse à la détection d'une donnée d'ordre (NSJ, NSS) représentative d'une absence de ladite condition relative à l'ordre d'introduction desdites informations chiffrées et au moins une deuxième unité mémoire adressable suivant une séquence d'adressage prédéterminée en réponse à la détection d'une donnée d'ordre (SJ) représentative de la présence de ladite condition relative à l'ordre d'introduction desdites informations chiffrées.

10. Dispositif selon la revendication 9, caractérisé en ce que la deuxième unité mémoire est un registre.

11. Dispositif selon l'une quelconque des revendications 5 à 10, caractérisé en ce que ladite mémoire (12; 131) comporte plusieurs unités mémoires adressables sélectivement par lesdits moyens de traitement en fonction d'une donnée de ladite information chiffrée qui est représentative de la nature du media de délivrance de ladite information chiffrée.

12. Dispositif selon l'une quelconque des revendications 1 à 11, caractérisé en ce que les moyens de traitement (4 ; 104) comprennent au moins un compteur de gain qui est incrémenté à chaque validation d'une participation.

13. Dispositif selon la revendication 12, caractérisé en ce que lesdits moyens de traitement (4; 104) sont adaptés pour incrémenter le compteur de gain d'une quantité fonction d'une donnée de gain contenue dans ladite information chiffrée.

14. Dispositif selon la revendication 12, caractérisé en ce que lesdits moyens de traitement (4; 104) sont adaptés pour incrémenter le compteur de gain d'une quantité calculée, suivant une loi prédéterminée mémorisée dans le dispositif, en fonction d'au moins une donnée de gain contenue dans ladite information chiffrée et/ou mémorisée de manière temporaire ou permanente dans le dispositif.

15. Dispositif selon l'une quelconque des revendications 2 à 14, caractérisé en ce que les moyens de traitement comprennent des moyens pour débiter et authentifier, en liaison avec un organisme habilité, des gains comptabilisés dans le dispositif, lesdits moyens de débit et d'authentification étant adaptés pour délivrer un code de sortie composite par codage, suivant un premier algorithme donné en fonction d'une information de commande externe comprenant un nombre aléatoire et délivrée à partir dudit organisme habilité, du gain débité, de ladite date de référence et d'un code d'identification propre au dispositif et mémorisé dans des moyens de mémorisation, ledit organisme habilité étant adapté pour effectuer, au moyen dudit nombre aléatoire, suivant un second algorithme corrélé au premier algorithme, un calcul sur ledit code de sortie composite pour décoder ledit gain et calculer un code d'identification externe, ledit gain étant authentifié lorsqu'il y a cohérence dudit code d'identification externe avec une information de contrôle connue de l'organisme habilité et que ladite date de référence est valide.

16. Dispositif selon la revendication 15, caractérisé en ce que ladite information de commande comprend le montant du gain que l'utilisateur souhaite voir débité de son dispositif et les moyens de traitement comprennent des moyens pour comparer le gain mémorisé dans ledit compteur au gain à débiter et pour décrémenter ledit compteur en fonction du résultat de ladite comparaison.

17. Dispositif selon la revendication 16, caractérisé en ce qu'un compteur de gain est associé à chaque média délivrant ladite information chiffrée et ladite information de commande comprend une donnée représentative dudit média, ledit gain étant celui comptabilisé dans le compteur identifié par ladite donnée.

18. Dispositif selon l'une quelconque des revendications 15 à 17, caractérisé en ce que les moyens de traitement (4 ; 104) comprennent des moyens pour inhiber les moyens de validation en réponse à la délivrance dudit code de sortie composite (X) et pour rendre opérationnel lesdits moyens de validation et débiter ledit compteur de gain en réponse à l'introduction dans ledit dispositif d'un code de déblocage délivré par ledit organisme habilité lorsque ledit gain est authentifié.

19. Dispositif selon l'une quelconque des revendications 1 à 18, caractérisé en ce que les moyens de traitement comprennent des moyens de contrôle d'erreur et/ou de cohérence pour contrôler ladite information chiffrée en fonction d'au moins un code de contrôle contenu dans ladite information.

20. Dispositif selon l'une quelconque des revendications 1 à 19, caractérisé en ce que les moyens de traitement (4 ; 104) comprennent des moyens pour traiter, suivant une règle prédéterminée, en fonction d'au moins une donnée secrète mémorisée dans le dispositif, une donnée aléatoire introduite dans le dispositif, et pour mémoriser une information représentative du résultat dudit traitement, lesdits moyens de validation validant conditionnellement ladite participation en fonction d'une seconde condition comprenant le résultat dudit traitement.

21. Dispositif selon l'une quelconque des revendications 1 à 20, caractérisé en ce que ladite interface d'entrée comprend un clavier (8 ; 108).

22. Dispositif selon l'une quelconque des revendications 1 à 21, caractérisé en ce que ladite interface d'entrée comprend des moyens optiques (R) de lecture d'informations à partir d'un écran d'affichage.

23. Dispositif selon l'une quelconque des revendications 1 à 22, caractérisé en ce que ladite interface d'entrée comprend des moyens (R) de lecture d'un code-barres.

24. Dispositif selon l'une quelconque des revendications 1 à 23, caractérisé en ce que ladite interface de sortie comprend un écran d'affichage (6; 106).

25. Dispositif selon l'une quelconque des revendications 1 à 24, caractérisé en ce que les moyens de traitement (4 ; 104) sont constitués par un micro-calculateur programmé.

26. Dispositif selon l'une quelconque des revendications 1 à 25, caractérisé en ce que ladite mémoire (12) est une mémoire vive.

27. Dispositif selon l'une quelconque des revendications 1 à 25, caractérisé en ce qu'il comprend un boîtier (102) et un sous-ensemble amovible (M) comportant ladite mémoire (131) et des moyens (133, 134) de connexion audit boîtier.

28. Dispositif selon la revendication 27, caractérisé en ce que lesdits moyens de traitement sont au moins en partie implantés dans ledit sous-ensemble amovible (M).

29. Dispositif selon l'une quelconque des revendications 27 et 28, caractérisé en ce que ledit sous-ensemble amovible est constitué par une carte à microcircuits.

30. Dispositif selon l'une quelconque des revendications 1 à 29, caractérisé en ce qu'il est combiné dans un même boîtier (202) avec un dispositif de télécommande d'un appareil d'accès à un media, tel qu'un téléviseur.

## Patentansprüche

1. Elektronische Teilnahmevorrichtung einer Person an Medienoperationen, die die Eingabe von Eingangsbzw. Eingabedaten in die Vorrichtung implizieren, auf den Befehl der Person hin, ansprechend auf eine an ein Publikum gelieferte Information durch mindestens ein Medium, wobei die Vorrichtung folgendes aufweist: Datenverarbeitungsmittel, wenigstens einen Speicher, wenigstens eine Eingangs- bzw. Eingabeschnittstelle zum Anlegen der Eingabedaten an die Datenverarbeitungsmittel, wenigstens eine Ausgangsbzw. Ausgabeschnittstelle zum Übertragen aus der Vorrichtung heraus von Ausgangs- bzw. Ausgabendaten, die repräsentativ für die Teilnahme der Person an den Medienoperationen sind, und eine elektrische Versorgungsquelle für die verschiedenen elektrischen Schaltungen der Vorrichtung,
dadurch **gekennzeichnet**, daß die Vorrichtung tragbar ist und die durch die Medien gelieferte Information eine chiffrierte Information ist, dazu bestimmt, eingegeben zu werden als Eingabedatum in die Vorrichtung und einen variablen numerischen Wert aufweist, und dadurch, daß die Datenverarbeitungsmittel (4; 104) folgendes aufweisen:
- Dechiffriermittel für die Information,
- Mittel zum Extrahieren des variablen numerischen Wertes aus der dechiffrierten Information,
- Vergleichsmittel zum Entscheiden, ob der extrahierte variable numerische Wert mit wenigstens einem zuvor gespeicherten variablen numerischen Wert übereinstimmt,
- Mittel der bedingten bzw. bedingenden Validierung bzw. Prüfung zum Validieren bzw. Fürgültigerklären der Teilnahme und zum Speichern in dem Speicher, während einer bestimmten Zeitperiode, einer Information, die repräsentativ für den extrahierten variablen numerischen Wert und für die Validierung ist, wenn wenigstens eine Bedingung, die die Abwesenheit der Übereinstimmung aufweist, erfüllt ist und anderenfalls zum Verbieten der Validierung und
- Mittel zum Berechnen und selektiven Anlegen an die Ausgabeschnittstellen (7; 107) eines Ausgangscodes (X), der repräsentativ für validierten Teilnahmen ist, die durch die Mittel der bedingten Validierung validiert wurden.

2. Vorrichtung nach Anspruch 1, dadurch gekennzeichnet, daß die dechiffrierte Information ein Datum der Datierung aufweist und die Verarbeitungsmittel (4; 104) geeignet sind zum Extrahieren des Datums der Datierung und zum Verbieten der Validierung der Teilnahme, wenn das extrahierte Datum der Datierung repäsentativ ist für ein früheres Datum zu einem Referenzdatum, das in der Vorrichtung enthalten ist, und zum Löschen aus dem Speicher, bei jedem Wechseln des Referenzdatums, der Informationen, die repräsentativ für zuvor gespeicherten variablen numerischen Werte sind.

3. Vorrichtung nach Anspruch 2, dadurch gekennzeichnet, daß die Validierung abhängig ist von der Gegenwart eines Datums der Datierung, das identisch oder später zu dem Referenzdatum ist, wobei das Datum der Datierung gespeichert wird auf die Validierung hin und das Referenzdatum aufgebaut wird durch das Datum der Datierung, das zuletzt gespeichert wurde.

4. Vorrichtung nach Anspruch 3, dadurch gekennzeichnet, daß der extrahierte variable numerische Wert eine Ordnungszahl ist und dadurch, daß die Validierung abhängig ist von bzw. untergeordnet ist zu der Existenz eines Datums der Datierung und eines identischen Referenzdatums und von der Existenz einer in der Vorrichtung gespeicherten Ordnungsrelation zwischen der extrahierten Ordnungszahl und der zuletzt gespeicherten Ordnungszahl.

5. Vorrichtung nach Anspruch 2, dadurch gekennzeichnet, daß die Vorrichtung (1) eine Uhr (10) aufweist, gekoppelt an die Verarbeitungsmittel (4) zum Liefern eines absoluten Referenzdatums (J, S), wobei die Verarbeitungsmittel geeignet sind zum Authorisieren des Vergleichs des extrahierten variablen numerischen Werts mit dem(n) zuvor gespeicherten variablen numerischen Wert(en), wenn es eine Übereinstimmung zwischen dem extrahierten Datum der Datierung und dem absoluten Referenzdatum (J, S) gibt.

6. Vorrichtung nach Anspruch 5, dadurch gekennzeichnet, daß der Speicher wenigstens eine Speichereinheit aufweist, die eine Tabelle bildet, von der die Speicherplätze, die geeignet sind, daß man in jedem eine Information speichert, die repräsentativ für einen variablen numerischen Wert ist, als Adressen numerische Werte besitzen, die geeignet sind, in der chiffrierten Information enthalten zu sein.

7. Vorrichtung nach einem der Ansprüche 5 und 6, dadurch gekennzeichnet, daß der Speicher (12; 131) mehrere Speichereinheiten aufweist, die selektiv adressierbar sind durch die Verarbeitungsmittel (4; 104) als Funktion des Grades der Auflösung (Tag, Woche) des extrahierten Datums der Datierung.

8. Vorrichtung nach einem der Ansprüche 5 bis 7, dadurch gekennzeichnet, daß der Speicher (12; 131) mehrere Speichereinheiten umfaßt, die selektiv adressierbar sind durch die Verarbeitungsmittel abhängig bzw. als Funktion von einem Datum der Reihenfolge, das in der chiffrierten Information enthalten ist und repräsentativ ist für die Anwesenheit oder die Abwesenheit einer Bedingung, die sich auf die Reihenfolge der Eingabe der chiffrierten Information in die Vorrichtung bezieht.

9. Vorrichtung nach Anspruch 8, dadurch gekennzeichnet, daß der Speicher (12; 131) mindestens eine erste Speichereinheit aufweist, von der die Speicherplätze direkt adressierbar sind auf die Detektion eines Datums der Reihenfolge (NSJ, NSS) hin, die repräsentativ ist für eine Abwesenheit der Bedingung, die sich auf die Reihenfolge der Eingabe der chiffrierten Information bezieht, und mindestens eine zweite Speichereinheit, die adressierbar ist gemäß einer vorbestimmten Adressierungssequenz auf die Detektion eines Datums der Reihenfolge bzw. Ordnung (SJ) hin, die repräsentativ für die Anwesenheit bzw. Existenz der Bedingung ist, die sich auf die Reihenfolge der Eingaben der chiffrierten Informationen bezieht.

10. Vorrichtung nach Anspruch 9, dadurch gekennzeichnet, daß die zweite Speichereinheit ein Register ist.

11. Vorrichtung nach einem der Ansprüche 5 bis 10, dadurch gekennzeichnet, daß der Speicher (12; 131) mehrere Speichereinheiten aufweist, die selektiv adressierbar sind durch die Verarbeitungsmittel abhängig von einem Datum der chiffrierten Information, das repräsentativ für die Natur des Mediums der Lieferung der chiffrierten Information ist.

12. Vorrichtung nach einem der Ansprüche 1 bis 11, dadurch gekennzeichnet, daß die Verarbeitungsmittel (4; 104) wenigstens einen Gewinnzähler aufweisen, der bei jeder Validierung einer Teilnahme inkrementiert wird.

13. Vorrichtung nach Anspruch 12, dadurch gekennzeichnet, daß die Verarbeitungsmittel (4; 104) geeignet sind zum Inkrementieren des Gewinnzählers in einer Größe abhängig von einem Datum des Gewinns, das in der chiffrierten Information enthalten ist.

14. Vorrichtung nach Anspruch 12, dadurch gekennzeichnet, daß die Verarbeitungsmittel (4; 104) geeignet sind zum Inkrementieren des Gewinnzählers um einen berechneten Betrag gemäß einem vorbestimmten Gesetz, das in der Vbrrichtung gespeichert ist, abhängig von wenigstens einem Datum des Gewinns, das in der chiffrierten Information enthalten ist und/oder auf eine temporäre oder permanente Art und Weise in der Vorrichtung gespeichert ist.

15. Vorrichtung nach einem der Ansprüche 2 bis 14, dadurch gekennzeichnet, daß die Verarbeitungsmittel Mittel aufweisen zum Belasten bzw. Anrechnen und Authentifizieren, in Verbindung mit einem ermächtigten bzw. befähigten Organismus, von in der Vorrichtung verbuchten Gewinnen, die Mittel des Belastens und der Authentifizierung geeignet sind zum Liefern eines durch Codierung zusammengesetzten Ausgangscodes gemäß einem ersten Algorithmus, der abhängig von einer externen Befehlsinformation gegeben ist, die eine Zufallszahl aufweist und geliefert wird, ausgehend von dem ermächtigten Organismus, des angerechneten Gewinns, des Referenzdatums und eines Identifizierungscodes, der der Vorrichtung eigen ist und in den Speichermitteln gespeichert wird, wobei der ermächtigte Organismus geeignet ist zum Bewirken mittels der Zufallszahl, gemäß einem zweiten Algorithmus, der mit dem ersten Algorithmus korreliert ist, einer Berechnung auf den zusammengesetzten Ausgabecode zum Decodieren des Gewinnes und zum Berechnen eines externen Identifikationscodes, wobei der Gewinn authentifiziert wird, wenn es eine Kohärenz bzw. Übereinstimmung zwischen dem externen Identifikationscode mit einer Steuer- bzw. Kontrollinformation, die vom ermächtigten Organismus bekannt ist, gibt und das Referenzdatum gültig ist.

16. Vorrichtung nach Anspruch 15, dadurch gekennzeichnet, daß die Befehlsinformation einen Betrag des Gewinns aufweist, den der Anwender von seiner Vorrichtung belastet sehen möchte, und daß die Verarbeitungsmittel Mittel aufweisen zum Vergleichen des in dem Zähler gespeicherten Gewinns mit dem Gewinn zum Belasten bzw. Anrechnen und zum Dekrementieren des Zählers als Funktion des Ergebnisses des Vergleichs.

17. Vorrichtung nach Anspruch 16, dadurch gekennzeichnet, daß ein Gewinnzähler mit jedem Medium assoziiert ist, das die chiffrierte Information liefert und die Befehlsinformation ein Datum aufweist, das repräsentativ für das Medium ist, und wobei der Gewinn derjenige ist, der in dem durch das Datum identifizierten Zähler verbucht wurde.

18. Vorrichtung nach einem der Ansprüche 15 bis 17, dadurch gekennzeichnt, daß die Verarbeitungsmittel (4; 104) Mittel aufweisen zum Sperren bzw. Blockieren der Validierungsmittel auf die Lieferung des zusammengesetzten Ausgabecodes (X) hin und zum Betriebsbereitmachen der Validierungsmittel und zum Belasten des Gewinnzählers ansprechend auf die Eingabe in die Vorrichtung eines Deblockierungscodes, der durch den ermächtigten Organismus geliefert wurde, wenn der Gewinn authentifiziert wurde.

19. Vorrichtung nach einem der Ansprüche 1 bis 18, dadurch gekennzeichnet, daß die Verarbeitungsmittel folgendes aufweisen: Mittel der Kontrolle bzw. Steuerung eines Fehlers und/oder der Übereinstimmung zum Kontrollieren der chiffrierten Information abhängig von wenigstens einem Kontrollcode, der in der Information enthalten ist.

20. Vorrichtung nach einem der Ansprüche 1 bis 19, dadurch gekennzeichnet, daß die Verarbeitungsmittel (4; 104) Mittel aufweisen zum Verarbeiten gemäß einer vorbestimmten Regel abhängig von wenigstens einem geheimen, in der Vorrichtung gespeicherten Datum, einer in die Vorrichtung eingegebenen Zufallszahl und zum Speichern einer Information, die repräsentativ für das Ergebnis der Verarbeitung ist, und wobei die Validierungsmittel bedingt die Teilnahme validieren abhängig von einer zweiten Bedingung, die das Ergebnis der Verarbeitung aufweist.

21. Vorrichtung nach einem der Ansprüche 1 bis 20, dadurch gekennzeichnet, daß die Eingabeschnittstelle eine Tastatur (8; 108) aufweist.

22. Vorrichtung nach einem der Ansprüche 1 bis 21, dadurch gekennzeichnet, daß die Eingabe- bzw. Eingangsschnittstelle optische Informationslesemittel (R) aufweist, ausgehend bzw. auf der Grundlage von einem Anzeigebildschirm.

23. Vorrichtung nach einem der Ansprüche 1 bis 22, dadurch gekennzeichnet, daß die Eingabeschnittstelle Strichcodelesemittel (R) aufweist.

24. Vorrichtung nach einem der Ansprüche 1 bis 23, dadurch gekennzeichnet, daß die Ausgabeschnittstelle einen Anzeigebildschirm (6; 106) aufweist.

25. Vorrichtung nach einem der Ansprüche 1 bis 24, dadurch gekennzeichnet, daß die Verarbeitungsmittel (4; 104) durch einen programmierten Mikrocomputer bzw. Rechenchip aufgebaut sind.

26. Vorrichtung nach einem der Ansprüche 1 bis 25, dadurch gekennzeichnet, daß der Speicher (12) ein Schreib- und Lesespeicher ist.

27. Vorrichtung nach einem der Ansprüche 1 bis 25, dadurch gekennzeichnet, daß sie ein Gehäuse (102) und eine auswechselbare Unteranordnung (M) aufweist, die den Speicher (131) und Gehäuseverbindungsmittel (133, 134) umfaßt.

28. Vorrichtung nach Anspruch 27, dadurch gekennzeichnet, daß die Verarbeitungsmittel wenigstens teilweise in der auswechselbaren Unteranordnung (M) implantiert bzw. inkorporiert sind.

29. Vorrichtung nach einem der Ansprüche 27 und 28, dadurch gekennzeichnet, daß die auswechselbare Unteranordnung durch eine Chipkarte bzw. Karte mit Mikroschaltungen aufgebaut ist.

30. Vorrichtung nach einem der Ansprüche 1 bis 29, dadurch gekennzeichnet, daß sie in dem gleichen Gehäuse (202) mit einer Fernsteuerungsvorrichtung eines Apparats des Zugangs an ein Medium, wie zum Beispiel einem Fernseher, kombiniert ist.

## Claims

1. Electronic device for the participation of an individual in operations using a medium, involving the introduction of input data in said device, under the control of said individual, in response to an item of information supplied to a public by at least one medium, comprising means of processing data, at least a memory, at least one input interface for applying said input data to said means of processing, at least one output interface for transmitting to the exterior of said device output data representative of said participation of said individual to said operations, and an electrical power supply for the various electrical circuits of the device, characterised in that said device is portable and in that, said item of information supplied by said medium being a coded information intended to be introduced as an input data in said device and comprising a variable numerical value, said means of processing (4 ; 104) comprise:
- means of decoding said information,
- means of extracting said variable numerical value from said decoded information,
- comparing means for determining whether said variable numerical value coincides with at least a previously stored variable numerical value,
- conditional validation means for validating said participation and for storing in said memory, over a determined period of time, information representative of said extracted variable numerical value and of said validation if at least one condition, comprising the absence of said coincidence, is fulfilled, otherwise for prohibiting said validation, and
- computing means for computing and for selectively applying to said output interface (7 ; 107) an output code (X) representative of participations validated by said conditional validation means.

2. Device according to Claim 1, characterised in that said decoded information comprises a dating datum and said means of processing (4; 104) are adapted to extract said dating datum and to prohibit the validation of said participation when said extracted dating datum is representative of a date prior to a reference date contained in the device and to delete from said memory, at each change of said reference date, the information representative of previously stored variable numerical values.

3. Device according to claim 2, characterised in that said validation depends on the presence of a dating datum identical to or later than said reference date, said dating datum being stored in response to said validation and said reference date being constituted by the most recent stored dating datum.

4. Device according to claim 3, characterised in that said extracted variable numerical value is an order number and in that said validation depends on the presence of identical dating datum and reference date and on the presence of an order relationship stored in the device between the extracted order number and the last stored order number.

5. Device according to Claim 2, characterised in that said device (1) comprises a clock (10) coupled to the means of processing (4) in order to supply an absolute reference date (J, S), said means of processing being adapted to authorise said comparison of the decoded variable numerical value with the previously stored variable numerical value(s) when there is coincidence between the extracted dating datum and the absolute reference date (J, S).

6. Device according to Claim 5, characterised in that said memory comprises at least one memory unit forming a table whose memory locations, in each of which an item of information representative of a variable numerical value is capable of being stored, have as addresses the numerical values capable of being contained in said encoded information.

7. Device according to any one of Claims 5 and 6, characterised in that said memory (12; 131) comprises several memory units which are selectively addressable by said means of processing (4; 104) as a function of the degree of resolution (day, week) of said extracted dating datum.

8. Device according to any one of Claims 5 to 7, characterised in that said memory (12; 131) comprises several memory units selectively addressable by said means of processing as a function of an order datum contained in said encoded information and representative of the presence or absence of a condition relating to the order of entry of said encoded information into the device.

9. Device according to Claim 8, characterised in that said memory (12; 131) comprises at least a first memory unit whose memory locations are directly addressable in response to the detection of an order datum (NSJ, NSS) representative of an absence of said condition relating to the order of entry of said encoded information, and at least one second memory unit addressable according to a predetermined addressing sequence in response to the detection of an order datum (SJ) representative of the presence of said condition relating to the order of entry of said encoded information.

10. Device according to Claim 9, characterised in that the second memory unit is a register.

11. Device according to any one of Claims 5 to 10, characterised in that said memory (12; 131) comprises several memory units selectively addressable by said means of processing as a function of a datum of said encoded information which is representative of the nature of the medium supplying said encoded information.

12. Device according to any one of Claims 1 to 11, characterised in that the means of processing (4; 104) comprise at least one winnings counter which is incremented at each validation of a participation.

13. Device according to Claim 12, characterised in that said means of processing (4; 104) are adapted to increment the winnings counter by a quantity depending on a winnings datum contained in said coded information.

14. Device according to Claim 12, characterised in that said means of processing (4; 104) are adapted to increment the winnings counter by a quantity which is calculated, according to a predetermined law stored in said device, as a function of at least one winnings datum contained in said coded information and/or stored temporarily or permanently in the device.

15. Device according to any one of Claims 2 to 14, characterised in that the means of processing comprise means of debiting and authenticating, in association with an authorised organisation, winnings taken into account in the device, said debiting and authenticating means being adapted to supply a composite output code by encoding, according to a first given algorithm as a function of an external item of control information comprising a random number and supplied from said authorised organisation, said debited winnings, said reference date and an identification code peculiar to the device and stored in storage means, said authorised organisation being adapted to carry out, by means of said random number, according to a second algorithm correlated with the first algorithm, a computation on said composite output code in order to decode said winnings and to compute an external identification code, said winnings being authenticated when there is consistency between said external identification code and an item of check information known to the authorised organisation and when said reference date is valid.

16. Device according to Claim 15, characterised in that said control information comprises the amount of the winnings that the user wishes to have debited from his device and the means of processing comprise means of comparing the winnings stored in said counter with the winnings to be debited and of decrementing said counter as a function of the result of said comparison.

17. Device according to Claim 16, characterised in that a winnings counter is associated with each medium supplying said encoded information and said control information comprises a datum representative of said medium, said winnings being that taken into account in the counter identified by said datum.

18. Device according to any one of Claims 15 to 17, characterised in that the means of processing (4; 104) comprise means of inhibiting the validation means in response to the delivery of said composite output code (X) and of making said validation means operational and debiting said winnings counter in response to the entry into said device of an enabling code supplied by said authorised organisation when said winnings are authenticated.

19. Device according to any one of Claims 1 to 18, characterised in that the means of processing comprise means of error checking and/or consistency checking in order to check said encoded information as a function of at least one check code contained in said information.

20. Device according to any one of Claims 1 to 19, characterised in that the means of processing (4; 104) comprise means for processing, according to a predetermined rule, as a function of at least one secret datum stored in the device, a random datum entered in the device, and for storing an item of information representative of the result of said processing, said validation means conditionally validating said participation as a function of a second condition comprising the result of said processing.

21. Device according to any one of Claims 1 to 20, characterised in that said input interface comprises a keypad (8; 108).

22. Device according to any one of Claims 1 to 21, characterised in that said input interface comprises optical means (R) of reading information from a display screen.

23. Device according to any one of Claims 1 to 22, characterised in that said input interface comprises means (R) of reading a bar code.

24. Device according to any one of Claims 1 to 23, characterised in that said output interface comprises a display screen (6; 106).

25. Device according to any one of Claims 1 to 24, characterised in that the means of processing (4; 104) are constituted by a programmed microcomputer.

26. Device according to any one of Claims 1 to 25, characterised in that said memory (12) is a random access memory.

27. Device according to any one of Claims 1 to 25, characterised in that it comprises a casing (102) and a removable subassembly (M) comprising said memory (131) and means (133, 134) of connection to said casing.

28. Device according to Claim 27, characterised in that said means of processing are at least partly installed in said removable subassembly (M).

29. Device according to either one of Claims 27 and 28, characterised in that said removable subassembly is constituted by a microcircuit card.

30. Device according to any one of Claims 1 to 29, characterised in that it is combined in the same casing (202) with a remote control device for gaining access to a medium, such as a television set.
